# EUROPEAN PATENT SPECIFICATION

(11) **EP 4 007 249 B1**
(45) Date of publication and mention of the grant of the patent: **01.04.2026**
(21) Application number: 21188987.8
(22) Date of filing: 02.08.2021
(51) Int. Cl.: H04N 1/00

(54) **IMAGE READING DEVICE AND IMAGE READING METHOD**
BILDLESEVORRICHTUNG UND -VERFAHREN
DISPOSITIF DE LECTURE D'IMAGE ET PROCÉDÉ DE LECTURE D'IMAGE

(30) Priority: 25.11.2020 JP 2020194938
(43) Date of publication of application: 01.06.2022
(73) Proprietor: Toshiba TEC Kabushiki Kaisha, Tokyo 141-8562 (JP)
(72) Inventor: Sadowara, Tetsuya, Shinagawa-ku, Tokyo 141-8562 (JP)
(74) Representative: Bandpay & Greuter

(56) References cited:
- EP-A2- 3 024 213
- US-A1- 2012 154 853
- US-A1- 2014 104 657
- US-A1- 2014 376 021

## Description

### FIELD

Certain embodiments described herein relate to an image reading device and an image reading method.

### BACKGROUND

There is an image reading device that scans each page of a multipage and converts the image data generated by the scanning to a file. For example, the image reading device is a scanner, a copier, and a Multifunction Peripheral (MFP). The image reading device may have a preview function by which a preview is displayed before the image data for each document page is converted into a file. The image reading device may display an entire page as a preview or the image reading device may automatically select a particular one of the pages that satisfies some condition as the preview. The condition may be, for example, whether the image data for the page is a color image or whether the image data is for a blank sheet (blank page). A user visually can check the page(s) for which a preview is displayed, select just the image data for the required pages, and cause the image reading device to convert the selected image data into a file.

If all pages are used as a preview, the user has to visually check the image data each page and determine whether every page actually satisfies the condition(s). Thus, especially when the number of pages of the document is large, the labor required of the user is high. On the other hand, if only the pages deemed as satisfying the condition(s) by the image reading device are automatically used as a preview, the labor of the user is reduced. However, in this case, the user's degree of freedom in page selection is reduced. For example, it becomes more difficult for the user to manually add a scanned page image to the file as required, such as when a page is erroneously determined not to satisfy the condition(s) by the image reading device.

Also known in the art are:
- US 2012/154853 A1 which discloses an image processing apparatus comprising a conversion unit that converts an original into image data by scanning the original, a detection unit that detects a blank page in the image data converted by the conversion unit, a separation unit that deletes image data of the blank page detected by the separation unit from the converted image data;
- US 2014/376021 A1 which discloses an apparatus including a display unit configured to display preview images of a plurality of image data, a determining unit configured to determine whether each of the plurality of image data is a blank page, a display control unit configured to display a preview image of image data determined not to be a blank page on the display unit in a first display mode and to display a preview image of image data determined to be a blank page on the display unit in a second display mode, and a change unit configured to change the determination result and the display mode at the display unit of image data corresponding to the preview image when receiving an instruction to change the selected display mode of a preview image from the first display mode to the second display mode, or from the second display mode to the first display mode;
- US 2014/104657 A1 which discloses an image formation device to effectively assist a user so that the result of aggregate printing matches the intention of the user.; and
- EP 3 024 213 A2 which discloses an image scanning apparatus and method for controlling the same.

### BRIEF DESCRIPTION OF THE DRAWINGS

FIG. 1 is an external view of an image forming device according to a first embodiment.
FIG. 2 is a schematic view illustrating a portion of an image reading unit.
FIG. 3 is a block diagram of an image forming device.
FIG. 4 is a block diagram of a control unit.
FIG. 5 is a block diagram of an auxiliary storage device.
FIG. 6 is a diagram illustrating an example of a document filter condition setting screen.
FIG. 7 is a diagram illustrating an example of a preview screen.
FIG. 8 is a diagram illustrating an example of a preview screen.
FIG. 9 is a diagram illustrating an example of a keyword setting screen.
FIG. 10 is a diagram illustrating an example of an image selection screen.
FIG. 11 is a flowchart of an operation of an image forming device.
FIG. 12 is a diagram illustrating a previously read document that can be read by an image forming device according to a second embodiment.
FIG. 13 is a diagram illustrating an example of a document read by an image forming device.
FIG. 14 is a diagram illustrating an example of a preview screen.
FIG. 15 is an external view of an image forming device according to a third embodiment.

### DETAILED DESCRIPTION

An object to be achieved by an embodiment is to provide an image reading device that can flexibly convert scanned image data to a file and an image reading method permitting scanned image data to be flexibly converted to a file.

The invention is set out in the appended set of claims.

In general, according to one embodiment, an image reading device includes a scanner configured to read documents with multiple pages and generate image data for each page. A display unit is provided to display the preview images for pages of a document that have been generated based on the image data from the scanner. An input unit is configured to receive input operations from a user. A controller is configured to cause the display unit to display preview images for pages of the document. The preview images are initially displayed as selected preview images or non-selected preview images according to whether the page corresponding to the preview image satisfies a filter condition or not. Each displayed preview image displayed on the display unit is selectable and deselectable by an input operation received via the input unit. The controller is further configured to generate a file including image data for the pages corresponding to the selected preview images.

Hereinafter, an image reading device and an image reading method according to certain example embodiments are described with reference to the drawings.

### (First embodiment)

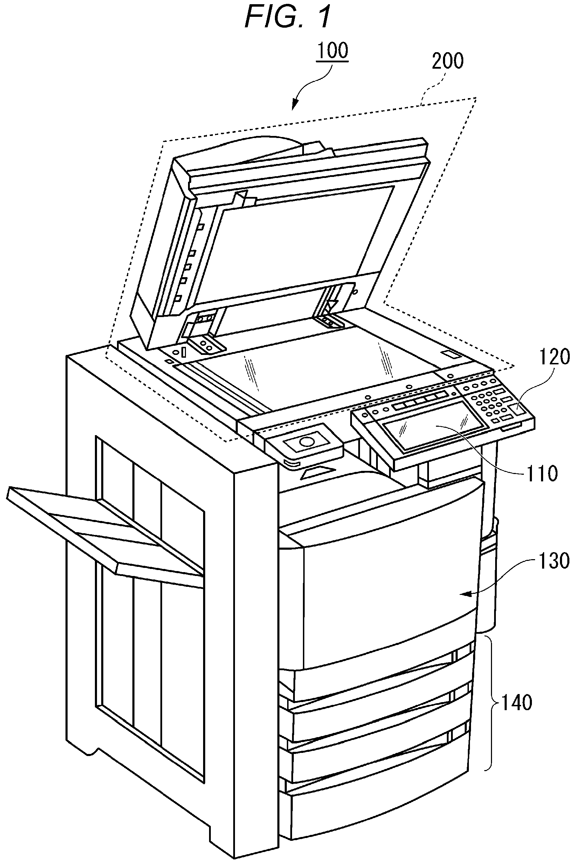

FIG. 1 is an external view illustrating an image forming device 100. The image forming device 100 is, for example, a multifunction peripheral (MFP). The image forming device 100 includes a display 110, a control panel 120, a printer unit 130, a sheet accommodating unit 140, and an image reading unit 200. The image forming device 100 is one example of an image reading device, and may be a copier, a scanner, or the like.

The display 110 is, for example, an image display device such as a liquid crystal display (LCD) or an organic Electro Luminescence (EL) display. The display 110 displays various kinds of information relating to the image forming device 100. The display 110 and the control panel 120 may be configured as an integrated touch panel.

The control panel 120 includes a plurality of buttons. The control panel 120 receives an input operation from a user. The control panel 120 outputs an operation signal to a control unit 101 of the image forming device 100 in response to the input operation performed by the user.

The printer unit 130 prints an image on a sheet based on an image data file including the image data generated by the image reading unit 200. The printer unit 130 may be a device for fixing a visible image, such as a toner image, on a sheet or may be an inkjet-type device. The sheet is, for example, paper or label paper. In general, the sheet may be any material as long as the image forming device 100 can form an image on the surface thereof. The sheet may be a sheet from the sheet accommodating unit 140 or manually fed into the image forming device 100.

The sheet accommodating unit 140 stores a sheet to be used by the printer unit 130 for forming an image.

The image reading unit 200 reads an image from a document placed on a document stand. The image is read from the document based on reflected regions of brightness and darkness. The image reading unit 200 generates image data, which is digital data. The image reading unit 200 outputs the generated image data to the control unit 101. The control unit 101 records (stores) the image data in an auxiliary storage device 103. The control unit 101 may also output the image data to the printer unit 130. The control unit 101 may output the image data to another information processing device via a network or the like.

The control unit 101 generates preview image data based on the image data and records the generated preview image data in the auxiliary storage device 103 in association with the corresponding image data. The preview image data is data for displaying a preview image on the display 110. In this context, a preview image refers to an image obtained by reducing the size of the image data or the like. The user can refer to the preview image on the display 110 and check the content of the image data that has been generated by the image reading unit 200.

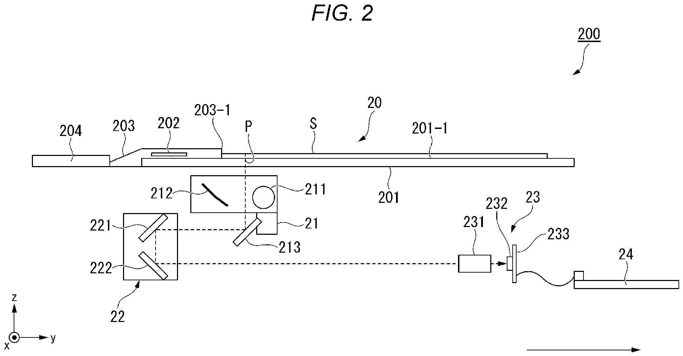

FIG. 2 is a schematic view illustrating a portion of an image reading unit 200.

The image reading unit 200 includes a document stand 20, a first carriage 21, a second carriage 22, an imaging unit 23, and an image reading control unit 24. The direction in which the first carriage 21 moves is referred to as the sub-scanning direction y. On the document stand 20, a direction orthogonal to the sub-scanning direction y is referred to as the main scanning direction x. The direction orthogonal to the main scanning direction x and the sub-scanning direction y is referred to as the height direction z.

The document stand 20 includes a document stand glass 201, a shading plate 202, a document scale 203, and a through-lead glass 204.

The document stand glass 201 has a surface 201-1 on which the document is placed. The shading plate 202 is configured with a white material. The shading plate 202 is white and this is used as a reference for shading correction of images read from a document. The shading plate 202 is long in the main scanning direction x.

In addition, the document scale 203 indicates a position of a document on the document stand glass 201. A tip reference portion 203-1 is provided at the end portion of the document scale 203. The tip reference portion 203-1 forms a step with respect to the surface 201-1 of the document stand glass 201 to form a convex portion for pressing the end portion of the document. The position of the document is determined by being pressed to the tip reference portion 203-1 on the document stand glass 201. Positions for corners of the document are set in advance on the surface 201-1. The corners of the document are to be placed at the positions set in advance so the position of the document in the main scanning direction x and the sub-scanning direction y are set.

The first carriage 21 includes a light source 211, a reflector 212, and a first mirror 213. The light source 211 emits light. The reflector 212 reflects the light from the light source 211. The light reflected by the reflector 212 is uniformly applied to the shading plate 202 and the document. The light distribution characteristics at the reading position of the document in the main scanning direction x are adjusted based on reflected light. The first mirror 213 reflects the light reflected by the shading plate 202 and the document to a second mirror 221 of the second carriage 22.

The second carriage 22 includes the second mirror 221 and a third mirror 222. The second mirror 221 reflects the light reflected from the first mirror 213 to the third mirror 222. The third mirror 222 reflects the light from the second mirror 221 to a condenser lens 231 of the imaging unit 23.

The imaging unit 23 includes the condenser lens 231, a CCD sensor 232, and a CCD substrate 233. The condenser lens 231 focuses the light reflected by the third mirror 222. The condenser lens 231 forms an image on an image formation surface of the CCD sensor 232. The CCD sensor 232 is installed on the CCD substrate 233. For example, the CCD sensor 232 is a hybrid four-line sensor. A hybrid four-line sensor includes a three-line sensor that reads a color image and a one-line sensor that reads a monochrome image. The three-line sensor reads light of red (R), green (G), and blue (B). The CCD sensor 232 converts the light from the condenser lens 231 into electric charges. The CCD sensor 232 converts the image formed by the condenser lens 231 into an electric signal. The CCD substrate 233 generates the image data based on the electric signal generated by the photoelectric conversion of the CCD sensor 232. The CCD substrate 233 generates the image data by using correction information obtained in advance by a shading correction process. The CCD substrate 233 outputs the generated image data to the image reading control unit 24. The above processing executed by the CCD substrate 233 can be executed by an analog front end (AFE) installed on the CCD substrate 233.

The image reading control unit 24 controls the first carriage 21, the second carriage 22, and the imaging unit 23. For example, the image reading control unit 24 controls the movements of the first carriage 21 and the lighting and extinguishing of the light source 211 on the first carriage 21. For example, the image reading control unit 24 controls the operation of the imaging unit 23.

The first carriage 21 moves in the sub-scanning direction y in response to the control of the image reading control unit 24. The second carriage 22 moves at one half the speed of the first carriage 231 and in the same direction as the first carriage 21 when the first carriage 21 is being moved. According to this operation, even when the first carriage 21 is moved, the optical path length of the light that reaches the CCD sensor 232 does not change. That is, the optical path length of the light in an optical system configured by the first mirror 213, the second mirror 221, the third mirror 222, and the condenser lens 231 is constant. In other words, the optical path length from the surface 201-1 to the CCD sensor 232 is constant.

In the example of FIG. 2, the first carriage 21 moves from the left to the right in the sub-scanning direction y. According to the movement of the first carriage 21 in the sub-scanning direction y, a reading position P of the document also moves. The reading position P also moves from the left to the right in the sub-scanning direction y. The reading position P is the position of one line in the main scanning direction x. According to the movement of the reading position P in the sub-scanning direction y, an image of the document is sequentially formed line-by-line on the CCD sensor 232. The CCD sensor 232 outputs a signal in for each imaged line in the main scanning direction x. The CCD substrate 233 generates the image data of the entire area on the document stand glass 201 based on the signals for the plurality of image lines.

In addition, the image reading unit 200 includes, for example, an auto document feeder (ADF) or an automatic document conveying device. The ADF conveys documents with a plurality of pages to be read to the document stand 20 page by page. In some examples, multipage documents may be manually inserted and sequentially conveyed to the document stand 20.

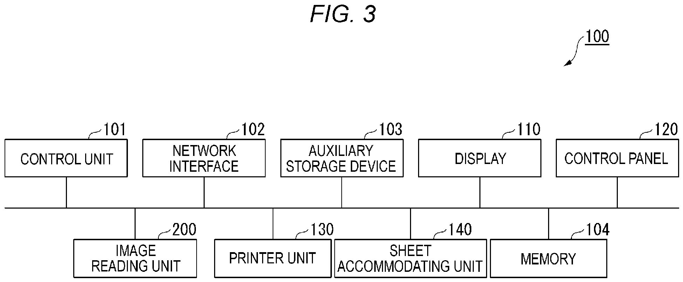

Next, with reference to FIG. 3, a configuration of the image forming device 100 of an embodiment is described. FIG. 3 is a block diagram illustrating a hardware configuration of the image forming device 100.

The image forming device 100 includes the control unit 101, a network interface 102, the auxiliary storage device 103, a memory 104, the display 110, the control panel 120, the printer unit 130, the sheet accommodating unit 140, and the image reading unit 200. Each unit of the image forming device 100 is connected via an internal bus and can thus input and output data to and from each other.

The control unit 101 controls operations of the functional units of the image forming device 100. The control unit 101 causes the functional units to execute various processes by executing programs. The programs are stored, for example, in the memory 104, in advance. Additional aspects of the configuration of the control unit 101 are described below.

The network interface 102 transmits and receives data to and from an external device. The network interface 102 operates as an input interface and receives data transmitted from the external device. The network interface 102 operates as an output interface and transmits the data to the external device.

The auxiliary storage device 103 is, for example, a storage medium such as a hard disk drive (HDD) or a solid-state drive (SSD). The auxiliary storage device 103 stores various kinds of data. The various kinds of data is, for example, image data, preview image data, an image data file, and various kinds of setting data. Additional aspects related to the configuration information recorded in the auxiliary storage device 103 are described below.

The memory 104 is, for example, a storage medium such as a random access memory (RAM). The memory 104 temporarily stores data and programs used by the functional units included in the image forming device 100. Digital data such as image data generated by the image reading unit 200 may be recorded in the memory 104 instead of the auxiliary storage device 103.

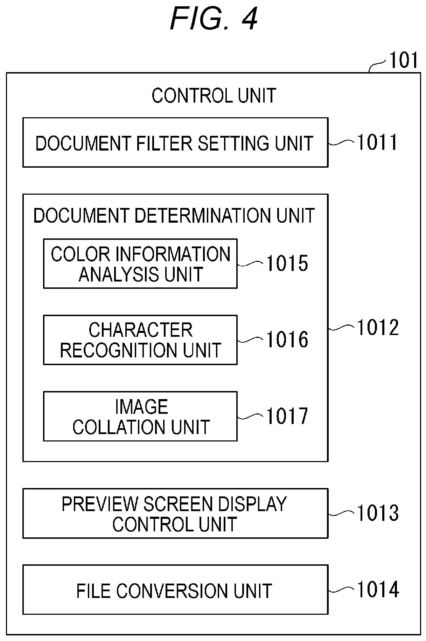

A configuration of the control unit 101 of the image forming device 100 according to the embodiment is described with reference to FIGS. 4 to 10.

FIG. 4 is a block diagram illustrating a schematic configuration of the control unit 101. The control unit 101 includes a document filter setting unit 1011, a document determination unit 1012, a preview screen display control unit 1013, and a file conversion unit 1014. In addition, the document determination unit 1012 includes a color information analysis unit 1015, a character recognition unit 1016, and an image collation unit 1017.

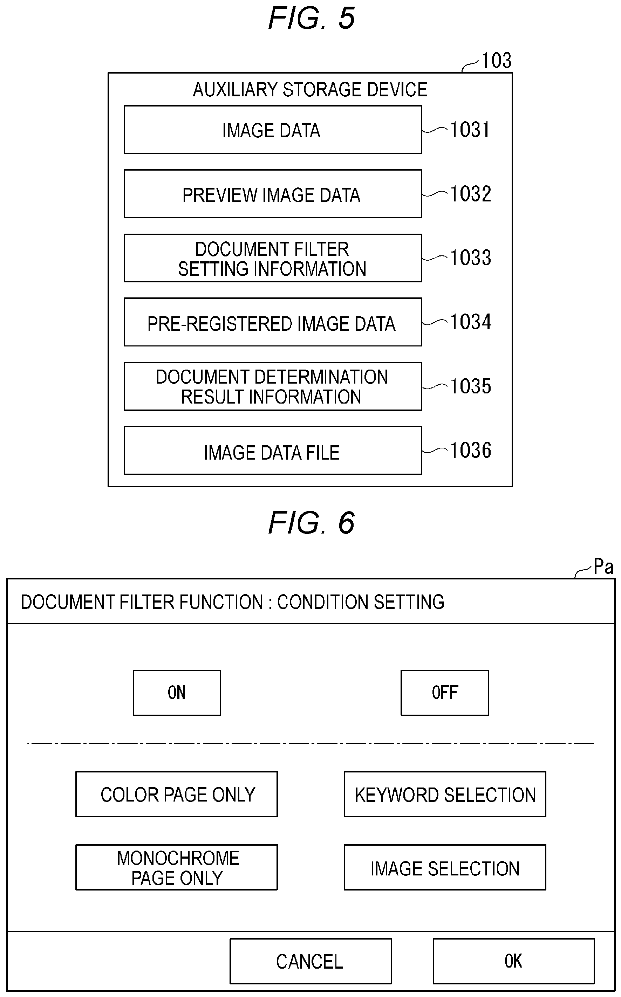

FIG. 5 is a block diagram illustrating a schematic configuration of the auxiliary storage device 103. The auxiliary storage device 103 stores image data 1031, preview image data 1032, document filter setting information 1033, pre-registered image data 1034, document determination result information 1035, and image data file 1036.

The image forming device 100 reads multipage documents with the image reading unit 200 and generates the image data 1031 for each page and also the preview image data 1032 for each page. The image forming device 100 displays preview images based on the generated preview image data 1032 on the display 110. At this point, the image forming device 100 displays the preview images based on the document filter condition as set by the user.

FIG. 6 is a diagram illustrating an example of a document filter condition setting screen Pa displayed on the display 110. The user refers to the document filter condition setting screen Pa and sets the document filter condition(s) by operating the control panel 120. For example, eight image areas corresponding to selection buttons are included on the document filter condition setting screen Pa. For example, as illustrated in FIG. 6, buttons labeled "ON", "OFF", "color page only", "monochrome page only", "keyword selection", "image selection", "cancel", and "OK" are provided. The user operates the control panel 120 and selects these selection buttons to set the document filter condition(s) according to user preference.

If the selection button "ON" is selected, the document filter function is placed in an ON state (active state). If the selection button "OFF" is selected, the document filter function is placed in an OFF state (inactive state).

If the selection button "ON" is selected, and the selection button "color page only" is then selected, the document filter condition is set so as to select color pages. If selection button "monochrome page only" is selected, the document filter condition is set so as to select monochrome pages. If the selection button "keyword selection" is selected, the document filter condition will be based on inclusion of a specific keyword being on the document page. If the selection button "image selection" is selected, the document filter condition will be based on a specific image being on the document page.

If the selection button "cancel" is selected, the previous document filter condition setting performed by selection of one or more of the selection buttons is not confirmed and any previous document filter condition selection inputs are invalid (not used). If the selection button "OK" is selected, the document filter condition(s) just input by the user are confirmed (and will be used in the subsequent filter processing). Once the document filter condition settings are confirmed, the control panel 120 outputs information indicating the set document filter condition(s) to the control unit 101.

A case where the document filter condition is whether the page is a color page is described.

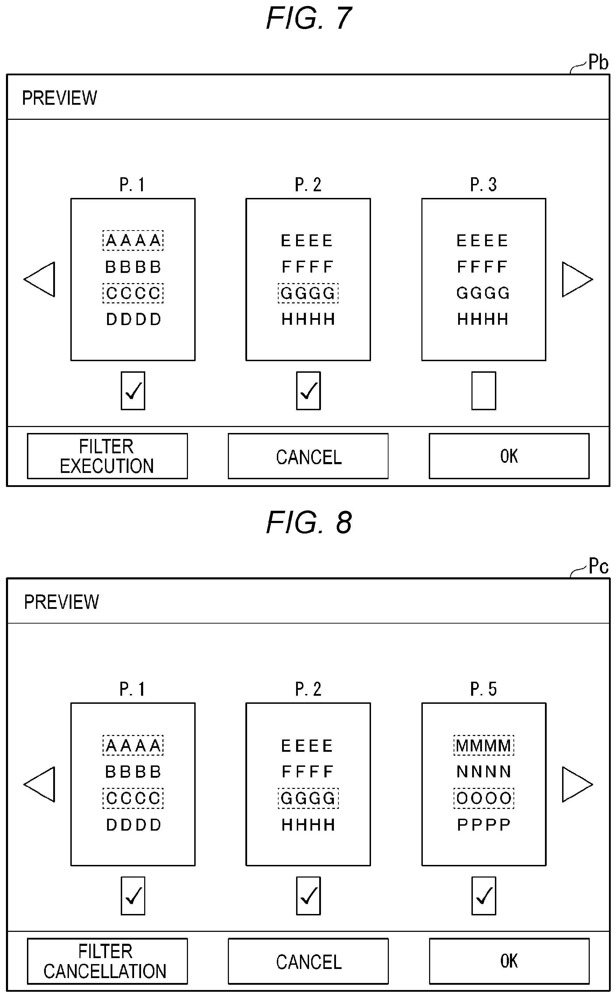

FIG. 7 is a diagram illustrating an example of a preview screen Pb if the document filter condition in which a color page is the condition is set. The preview image generated by reading the multipage documents with the image reading unit 200 can be displayed on the preview screen Pb in a sequence of the pages. In addition, in FIGS. 7 to 8, the area surrounded by a frame of a broken line is a color image area. For example, a character line such as "AAAA" as illustrated has a chromatic color such as red or blue. Otherwise, for example, a background color of the character line of "AAAA" is a chromatic color such as red or blue. Accordingly, in the preview screen Pb of FIG. 7, the first page (P.1) and the second page (P.2) are color pages, and the third page (P.3) is a monochrome page. In the example of FIG. 7, preview images for three pages are displayed at a time. The user can switch the page to be displayed by selecting an image area indicating a triangular button on the right end or the left end in the preview screen Pb.

Images indicating check boxes are displayed under the preview images displayed on the preview screen Pb. FIG. 7 illustrates the preview screen Pb when the document filter condition in which a color page is the condition is set. Therefore, a state in which the check boxes under the preview images of the first and second pages which are the color pages are checked is displayed. A state in which the check box under the preview image of the third page which is the monochrome page is not checked is displayed.

In addition, according to the present embodiment, the image forming device 100 is configured such that an indication as to whether a page meets the document filter condition is displayed so as to be distinguishable to the user by the check status of the check box of the corresponding preview image, but the embodiment is not limited thereto. In general, as long as the user can distinguish whether a page satisfies the document filter condition, various other display methods may be used. For example, a preview image of a page that satisfies the document filter condition could be displayed with a different background color, highlighted in some manner, surrounded by a frame, or displayed in a flashing (on/off) manner.

If the selection button "OK" in the preview screen Pb is selected by the user, the control unit 101 converts only the image data corresponding to the preview images with a checked box into a file. The user can check or uncheck the check boxes arbitrarily by selecting the check box images. Accordingly, the user can remove any page from the pages determined to satisfy the document filter condition by unchecking the check box. In addition, the user can add any page that was determined to not satisfy the document filter condition by checking the check box. In this manner, the user can manually add and remove pages as required, and thus can flexibly convert the scanned image data into a file.

If the selection button "cancel" in the preview screen Pb is selected by the user, the display of the preview screen Pb ends with the any changes in the check status of the check boxes not being recorded.

If the selection button "filter execution" in the preview screen Pb is selected by the user, the display is switched to a display with the filter based on the document filter condition applied. Specifically, the display switches to a preview screen Pc in which only the preview images of the pages determined to satisfy the document filter condition are displayed.

FIG. 8 is a diagram illustrating an example of the preview screen Pc for which the display is switched when the filter execution is selected. In the preview screen Pc, the preview image of the third page (which is a monochrome page that was displayed on the preview screen Pb illustrated in FIG. 7) is not displayed. In this case, the document filter condition selects for color pages, and thus only the preview images of the color pages are displayed on the preview screen Pc. With this configuration, the user can easily check only the preview images of the pages already determined to satisfy the document filter condition.

If the selection button "filter cancellation" in the preview screen Pc is selected by the user, the display is switched to a display without the document filter condition being applied. Specifically, the display is switched to the preview screen Pb of FIG. 7 in which preview images of all the read pages are displayed.

When the document filter condition selects for monochrome pages, basically the same process occurs, but with color pages as described in the above example being substituted with monochrome pages.

A case where the document filter condition is the page including a specific keyword is described.

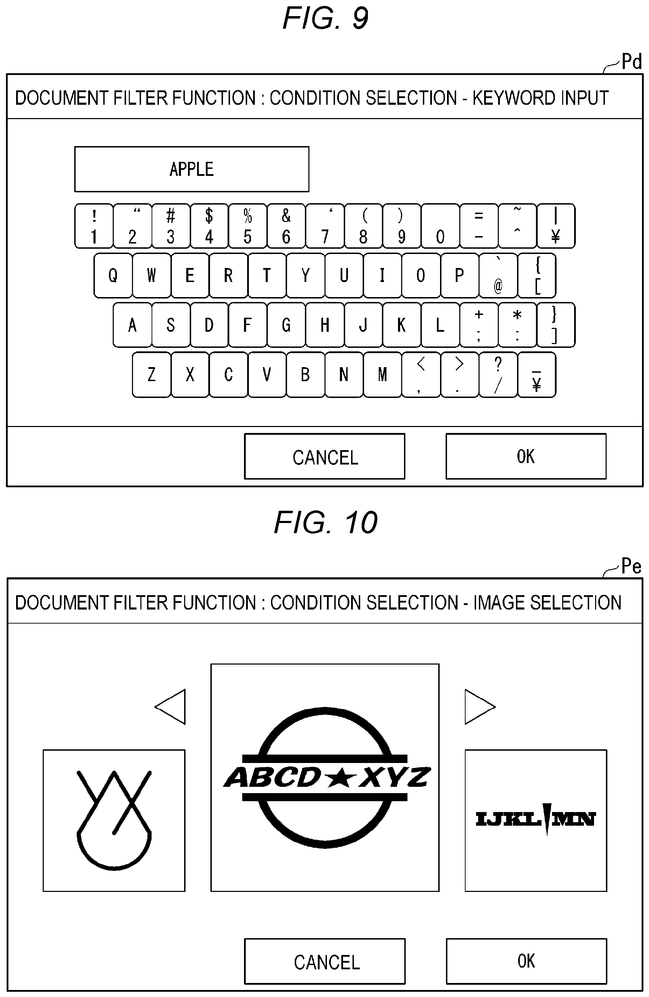

FIG. 9 is a diagram illustrating an example of a keyword setting screen Pd by which the document filter condition being inclusion of a specific keyword can be set. A software keyboard and a keyword display field are displayed on the keyword setting screen Pd. A keyword "APPLE" is displayed in the keyword display field on the keyword setting screen Pd depicted in FIG. 9. A keyword that has been input via the software keyboard is displayed in the keyword display field.

The user inputs a keyword (or keywords) as the document filter condition using the keyword setting screen Pd. If the keyword is input by the user, and the selection button "OK" on the keyword setting screen Pd is selected, the control unit 101 will identify a page including the keyword in the read image data. Specifically, the control unit 101 detects characters (text) on each page, for example, by an optical character recognition (OCR) function and compares the detected characters to the keyword. Accordingly, the control unit 101 identifies each page including the keyword (for example, "APPLE").

The control unit 101 generates the preview screen with only check boxes under the preview images corresponding to the pages with the keyword being checked. The control unit 101 displays the generated preview screen on the display 110.

The user can arbitrarily check or uncheck the check boxes by selecting the check box images on the displayed preview screen. Accordingly, the user removes any page from the pages determined to include the keyword by unchecking the check box or adds any page by checking its check box. In this manner, the user can manually add and remove the pages as required, and thus can flexibly convert the scanned image data into a file.

A case where the document filter condition is a specific image being on the page is described.

FIG. 10 is a diagram illustrating an example of an image selection screen Pe for setting the document filter condition when the condition is based on a specific image being on the page. At least one image registered by the user in advance is displayed on the image selection screen Pe. Three images registered in advance are displayed on the image selection screen Pe depicted in FIG. 10. The user can select a desired image by selecting image areas depicting triangular buttons on the left and the right in the image selection screen Pe. The image selection screen Pe in FIG. 10 indicates that the image enlarged and displayed in the center is the image to be selected.

The user selects an image for the document filter condition in the image selection screen Pe. Once an image is selected by the user, and the selection button "OK" on the image selection screen Pe is selected, the control unit 101 identifies the pages including the selected image in the read image data. Specifically, the control unit 101 detects images on each page, for example, by an image processing method, compares the detected images to the selected image by pattern matching, for example. Accordingly, the control unit 101 identities each page including the selected image.

The control unit 101 generates a preview screen with only the check boxes under the preview images corresponding to the pages including the selected image being checked. The control unit 101 causes the display 110 to display the generated preview screen.

The user arbitrarily can check or uncheck the check boxes by selecting the check box images on the displayed preview screen. Accordingly, the user can remove any page from the pages determined to include the selected image by unchecking the check box and add any page by checking its check box. In this manner, the user can manually add or remove a page as required, and thus can flexibly convert the scanned image data into a file.

Various functions of the control unit 101 are illustrated in FIG. 4 as functional units.

The document filter setting unit 1011 generates the document filter condition setting screen Pa (illustrated in FIG. 6) and causes the display 110 to display the screen. The document filter setting unit 1011 acquires the information from the control panel 120 indicating the input from the user made on the document filter condition setting screen Pa.

For example, if the document filter setting unit 1011 acquires the information indicating that the selection button labeled "color page only" was selected, the document filter condition is set accordingly. If the document filter setting unit 1011 acquires the information indicating that the selection button labeled "monochrome page only" was selected, the document filter condition is set accordingly.

If the document filter setting unit 1011 acquires the information indicating that the selection button labeled "keyword selection" was selected, the document filter setting unit 1011 generates the keyword setting screen Pd (illustrated in FIG. 9) and causes the display 110 to display the screen. The document filter setting unit 1011 acquires the information from the control panel 120 corresponding to the input by the user on the keyword setting screen Pd. The document filter setting unit 1011 sets the document filter condition accordingly.

If the document filter setting unit 1011 acquires information indicating that the selection button labeled "image selection" was selected, the document filter setting unit 1011 generates the image selection screen Pe (illustrated in FIG. 10) and causes the display 110 to display the screen. The document filter setting unit 1011 acquires the information from the control panel 120 corresponding to the image selection by the user on the image selection screen Pe. The document filter setting unit 1011 sets the document filter condition accordingly.

The document determination unit 1012 checks whether the document filter condition (as set by the document filter setting unit 1011) is satisfied in the image data read for each page by the image reading unit 200. The document determination unit 1012 records the document determination result information 1035 indicating the results for each page in the auxiliary storage device 103.

The color information analysis unit 1015 can be operated by the document filter setting unit 1011 when the document filter condition is based on the page being a color or monochrome page. The color information analysis unit 1015 acquires the image data 1031 for each page read by the image reading unit 200 from the auxiliary storage device 103. The color information analysis unit 1015 performs a color determination (color analysis) to detect whether each respective image data 1031 corresponds to a color page or a monochrome page. In general, the color determination can be performed by any suitable method. The color information analysis unit 1015 records document determination result information 1035 indicating the results- of the color determination in the auxiliary storage device 103.

The color information analysis unit 1015 has, for example, an automatic color selection (ACS) function. The color information analysis unit 1015 performs the color determination based on information that is a feature amount relating to the color of pixels that form the image data 1031. For example, the color information analysis unit 1015 converts image data 1031 that is RGB data into saturation data. In addition, the color information analysis unit 1015 may execute a filter process on the RGB data in advance in order to increase the accuracy of the conversion from the RGB data to the saturation data. The color information analysis unit 1015 compares the saturation of the pixels that configure the image data 1031 with a saturation threshold (determined in advance) for each pixel.

The color information analysis unit 1015 counts the number of pixels for which the saturation level is greater than the saturation threshold among the pixels included in the image data 1031. The color information analysis unit 1015 compares the number of the saturated pixels to a threshold of the number of pixels that is determined in advance. This threshold can be referred to as an "auto color select (ACS) threshold". If the number of pixels for which the saturation is greater than the saturation threshold is greater than the ACS threshold, the color information analysis unit 1015 determines that the image data 1031 is a color page. If the number of saturated pixels is the ACS threshold or less, the color information analysis unit 1015 determines that the image data 1031 is a monochrome page.

The color determination method is not particularly limited to the above. For example, the color information analysis unit 1015 may execute the color determination based on the proportion of the image occupied by saturated pixels (that is, the number of saturated pixels divided by the total number of pixels in the image data 1031). In this case, the ACS threshold corresponds to a proportional value.

In addition, the color information analysis unit 1015 may execute the color determination by using an RGB value instead of saturation.

In this manner, in the determination by the color information analysis unit 1015, the ACS threshold is the value that determines whether the image data 1031 is a color page or a monochrome page. In addition, in some examples, the ACS threshold may be variable. For example, the ACS threshold may be changed based on an instruction from the control panel 120.

The character recognition unit 1016 operates if the document filter condition is based on the inclusion of a specific keyword on the page. The character recognition unit 1016 acquires the image data 1031 from the auxiliary storage device 103 for each page read by the image reading unit 200. The character recognition unit 1016 acquires the information indicating the keyword(s) input result by the user on the keyword setting screen Pd (illustrated in FIG. 9) from the document filter setting unit 1011. The character recognition unit 1016 checks whether the respective image data 1031 is a page including the keyword.

The character recognition unit 1016 has, for example, an optical character recognition (OCR) function. The character recognition unit 1016 detects the characters (text) included on each page using the OCR function and compares the detected characters to the keyword. Accordingly, the character recognition unit 1016 determines whether the respective image data 1031 corresponds to a page including the keyword.

The image collation unit 1017 operates if the document filter condition is based on inclusion of a specific image on the page. The image collation unit 1017 acquires the image data 1031 from the auxiliary storage device 103 for each page read by the image reading unit 200. The image collation unit 1017 acquires the information indicating the input by the user on the image selection screen Pe (illustrated in FIG. 10) from the document filter setting unit 1011. The image collation unit 1017 acquires the pre-registered image data 1034 corresponding to a user-selected image from the auxiliary storage device 103. The image collation unit 1017 checks whether the respective image data 1031 corresponds to a page including the image corresponding to the pre-registered image data 1034.

The image collation unit 1017 has a pattern matching function, for example. The image collation unit 1017 compares the images included on each page to the pre-registered image data 1034 using the pattern matching function. Accordingly, the image collation unit 1017 determines whether the respective image data 1031 corresponds to a page including the user-selected image.

The preview screen display control unit 1013 acquires the document determination result information 1035 from the auxiliary storage device 103. The preview screen display control unit 1013 generates the preview screen and causes the display 110 to display the preview screen. At this point, the preview screen display control unit 1013 determines the appropriate states (e.g., checked or unchecked) for the check box images corresponding to each preview image for the preview screen based on the acquired document determination result information 1035.

The preview screen display control unit 1013 acquires the information indicating the input(s) by the user made on the preview screen using the control panel 120. The information indicating the present state of the check box for each page is set when the user selects the selection button "OK" on the preview screen. The preview screen display control unit 1013 updates the document determination result information 1035 stored by the auxiliary storage device 103 based on the acquired information from the preview screen.

The file conversion unit 1014 acquires the document determination result information 1035 from the auxiliary storage device 103. The file conversion unit 1014 specifies the pages to be converted into a file based on the document determination result information 1035. That is, the file conversion unit 1014 specifies the pages corresponding to the checked boxes for the preview images based on the document determination result information 1035. The file conversion unit 1014 acquires the image data 1031 corresponding to the specified pages from the auxiliary storage device 103. The file conversion unit 1014 generates the image data file 1036 by converting the acquired image data 1031 into a file. The file conversion unit 1014 records the generated image data file 1036 in the auxiliary storage device 103.

In addition, the file conversion unit 1014 may output the image data file 1036 to an external storage medium or the like. In addition, the file conversion unit 1014 may output the image data file 1036 to the printer unit 130 instead of recording the file in the storage medium. In this case, the printer unit 130 causes an image based on the image data file 1036 acquired from the file conversion unit 1014 to be printed on a sheet (or sheets).

Information recorded in the auxiliary storage device 103 illustrated in FIG. 5 is described.

The image data 1031 is scan data in a digital format that is generated when the image reading unit 200 reads the document and provides an image for each page read. The control unit 101 acquires the image data generated by the image reading unit 200 and records the image data in the auxiliary storage device 103.

The preview image data 1032 is digital data corresponding to the preview image generated by the control unit 101 together with each piece (page) of image data 1031 when the image data 1031 is generated. The preview image is an image obtained by reducing the image data in size. The user can check the content of the image data generated by the image reading unit 200 by referring to the preview images displayed on the display 110.

The document filter setting information 1033 is information indicating the document filter condition as designated by the user. Specifically, the document filter setting information 1033 is information indicating the input from the user on the document filter condition setting screen Pa (illustrated in FIG. 6), for example. The control unit 101 acquires the document filter setting information 1033 from the control panel 120 and records the information in the auxiliary storage device 103. For example, the document filter setting information 1033 is the information indicating whether a particular document filter condition is to be applied.

The pre-registered image data 1034 is data corresponding to an image to be checked against images in the document when the document filter condition is based on inclusion of a specific image on a page. The pre-registered image data 1034 is stored in the auxiliary storage device 103 in advance by the user. The image corresponding to the pre-registered image data 1034 is displayed, for example, on the image selection screen Pe illustrated in FIG. 10.

The document determination result information 1035 indicates the results of the determinations by the document determination unit 1012. The determination result indicates whether the image data corresponding to a page satisfies the document filter condition. The document determination result information 1035 can also be updated by a user unchecking a check box on the preview screen.

The image data file 1036 is generated by the file conversion unit 1014 based on the document determination result information 1035. A plurality of pieces of image data (multiple pages) can be included in the image data file 1036. The image data file 1036 is in a portable document format (PDF), for example.

An example of an operation of the image forming device 100 is described. In this example, a case where the document filter condition is whether the page is a color page is described.

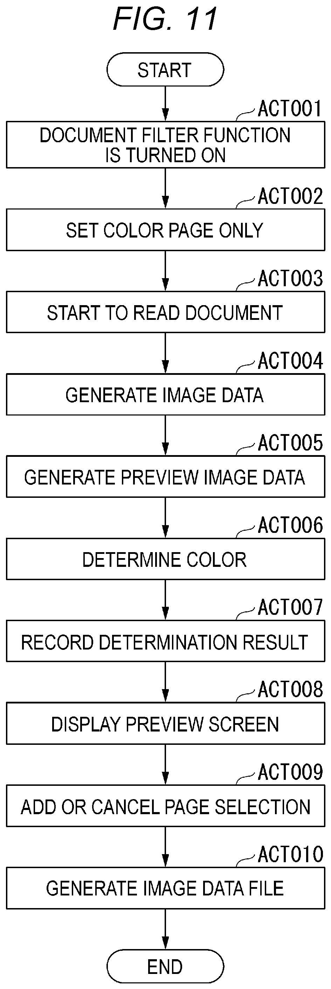

FIG. 11 is a flowchart illustrating an operation of the image forming device 100. The operation of the image forming device 100 illustrated in the flowchart starts, for example, when a multipage document is placed on the ADF by the user.

The document filter setting unit 1011 generates, for example, the document filter condition setting screen Pa (illustrated in FIG. 6) and causes the display 110 to display the screen. The control panel 120 receives the selection input of the selection button "ON" on the document filter condition setting screen Pa by the user. Accordingly, the document filter setting unit 1011 sets the document filter function to be in an ON state (ACT 001). Next, the control panel 120 receives the selection input of the selection button "color page only" on the document filter condition setting screen Pa by the user. Accordingly, the document filter setting unit 1011 sets the document filter condition in which a color page is the condition (ACT 002).

Next, the control panel 120 receives the selection input of the selection button "OK" on the document filter condition setting screen Pa. Accordingly, the image reading unit 200 starts to read the multipage document (ACT 003). The image reading unit 200 reads the image formed on the document mounted on the document stand based on the brightness and darkness of light and generates the image data which is digital data (ACT 004). The control unit 101 acquires the image data generated by the image reading unit 200 and records the data in the auxiliary storage device 103. In addition, the control unit 101 generates preview image data based on the acquired image data and records the generated preview image data in the auxiliary storage device 103 in association with the image data (ACT 005).

The color information analysis unit 1015 acquires the image data 1031 for each page read by the image reading unit 200, from the auxiliary storage device 103. The color information analysis unit 1015 executes the color determination on the respective image data 1031 (ACT 006). The color information analysis unit 1015 records the document determination result information 1035 indicating the result of the color determination in the auxiliary storage device 103 (ACT 007).

The preview screen display control unit 1013 acquires the document determination result information 1035 from the auxiliary storage device 103. The preview screen display control unit 1013 generates the preview screen and causes the display 110 to display the preview screen (ACT 008). At this point, the preview screen display control unit 1013 determines the check state of the check box image corresponding to each preview image included in the preview screen based on the acquired document determination result information 1035.

The control panel 120 receives the instruction for adding or removing the page selection on the preview screen from the user (ACT 009). The instruction for adding or removing the page selection is input, for example, by unchecking the check box for a preview image. The preview screen display control unit 1013 acquires the information indicating the input result input on the preview screen by the user, from the control panel 120. The preview screen display control unit 1013 updates the document determination result information 1035 stored in the auxiliary storage device 103, based on the acquired information.

The file conversion unit 1014 acquires the document determination result information 1035 from the auxiliary storage device 103. The file conversion unit 1014 specifies the page to be converted into a file based on the document determination result information 1035. The file conversion unit 1014 acquires the image data 1031 corresponding to the specified page from the auxiliary storage device 103. The file conversion unit 1014 generates the image data file 1036 by converting the acquired image data 1031 into a file (ACT 010). The file conversion unit 1014 records the generated image data file 1036 in the auxiliary storage device 103.

Here, the operation of the image forming device 100 illustrated by the flowchart of FIG. 11 ends.

An image reading device of one embodiment includes a reading unit, a display unit, an input unit, and a control unit. For example, the image reading device is an image forming device 100, the reading unit is an image reading unit 200, the display unit is a display 110, the input unit is a control panel 120, and the control unit is a control unit 101. The reading unit reads multipage documents and generates an image data for each page. For example, the image data is image data 1031. The display unit displays an image based on the image data. For example, the image based on the image data is preview image data 1032. The input unit receives an input operation indicating a change of a selection candidate of the image data from a user. For example, the input operation indicating the change of the selection candidate is the adding or removing of the page on a preview screen. The control unit causes the display unit to display whether the image data is selectable in a distinguishable manner, based on whether a condition relating to the image data is satisfied and generates a file including the selected image data in a storage unit. For example, the condition relating to the image data is a document filter condition, the distinguishable manner of display is a state of a check box, the input operation is the pressing of the selection button "OK", and the storage unit is an auxiliary storage device 103.

In addition, the input unit may receive the input operation indicating the condition relating to the image data. In this case, the user can set the document filter condition in any way.

The control unit may record the image data of the pages that satisfy the condition relating to the image data and the image data of the pages that do not satisfy the condition relating to the image data, but has been selected by a user input operation input, in the storage unit.

In addition, the control unit may record a file including the image data excluding any page that selection was cancelled by a user input operation in the storage unit.

In addition, the condition relating to the image data may be a condition including whether the document is a color document or a monochrome document, or whether a specific word or image is included in the document.

The image reading device can display the preview images on a page-by-page basis on the preview screen so that whether a page is judged to satisfy the document filter condition can be distinguished by the user. The image reading device converts only the image data corresponding to the preview images for which the check box is checked into a file. Here, the user can check or uncheck the check boxes arbitrarily by selecting the check box images. Accordingly, the user can remove any page from the pages determined to satisfy the document filter condition by simply unchecking the corresponding check box before causing the image reading device to convert the image data into a file. The user can similarly add any page by checking the corresponding check box. Therefore, the image forming device 100 can flexibly convert the scanned image data into a file.

The image forming device 100 can be configured to set the document filter condition to be based on a page being a color page or a monochrome page, but the embodiment is not limited thereto. For example, the image forming device 100 may be able to set the document filter condition to be based on a page being a grayscale page. Furthermore, the image forming device 100 may be able to set the document filter condition to be based on a page being any one of a plurality of kinds of pages, for example, pages that either one of a grayscale page or a monochrome page may be selected.

In addition, the image forming device 100 may be configured to be able to set the document filter condition to be based on a page not including a specific keyword (rather than including). Furthermore, the document filter condition can be based on a page including a keyword but not including another keyword.

In addition, document filter condition may be based on a page not including a specific image (rather than including). Furthermore, the document filter condition can be based on a page including one specific image but not including another specific image.

In addition, the document filter condition may be a combination of the above-described conditions. That is, multiple conditions may be applied in the filtering. For example, the document filter condition may require a page to be either a grayscale page or a monochrome page, include a first keyword but not a second keyword (different from the first keyword), include a first image, but not a second image (different from the first image).

### (Second embodiment)

An image forming device according to a second embodiment reads at least one document (referred to as a "previously read document") before reading the multipage document to be converted into a file (the "presently read document"). The image forming device sets a document filter condition by which any page in the presently read document that is the same as a page included in the previously read document is excluded.

In general, the second embodiment is similar to the to the first embodiment illustrated in FIGS. 1 to 5 unless otherwise noted.

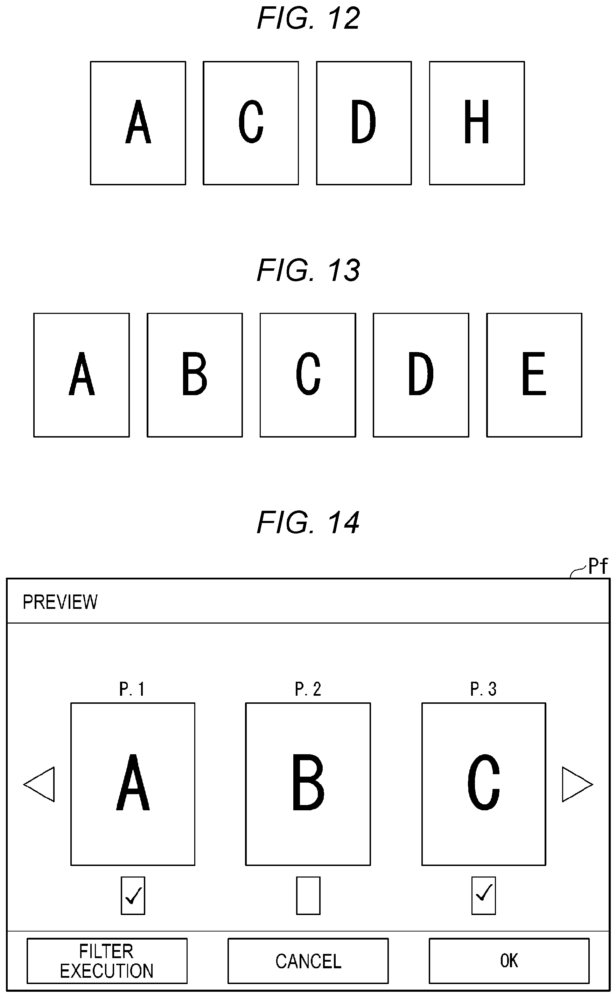

FIG. 12 is a schematic diagram illustrating an example according to a previously read document. The previously read document is depicted in FIG. 12 is four pages.

FIG. 13 is a schematic diagram illustrating an example of a multipage document to be converted into a file. The documents to be converted into a file that is exemplified in FIG. 13 are five pages.

FIGS. 12 and 13 illustrate that the page in which the same character (for example "A") is described is a page with the same formed image. That is, in the examples of FIGS. 12 and 13, the previously read document and the presently read document include common pages, the three sheets "A", "C", and "D".

The image reading unit 200 reads the previously read document and the document to be converted into a file and generates the image data for each page. The control unit 101 acquires the image data for each page generated by the image reading unit 200 and records the image data in the auxiliary storage device 103.

The document determination unit 1012 collates the image data of the previously read document and the image data of the present document to be converted into a file by pages, for example, by pattern matching the different pages. The document determination unit 1012 determines whether any page included in the present document t is the same as any page in the previously read document. The document determination unit 1012 records the document determination result information 1035 indicating the determination result in the auxiliary storage device 103.

The preview screen display control unit 1013 acquires the document determination result information 1035 from the auxiliary storage device 103. The preview screen display control unit 1013 generates the preview screen and causes the display 110 to display the preview screen. At this point, the preview screen display control unit 1013 determines the check status of the check box images corresponding to each preview image included in the preview screen based on the acquired document determination result information 1035.

FIG. 14 is a diagram illustrating an example of a preview screen Pf displayed on the display 110 of the image forming device 100 according to the second embodiment. The preview screen Pf indicates the state in which check boxes of the pages in which the same pages as the previously read documents are present are checked. That is, in the case of the previously read document and the document to be converted into a file described above, as illustrated in FIG. 14, a screen in which check boxes of the pages in which images of "A" and "C" are formed are checked is displayed.

The image forming device 100 according to the second embodiment first reads one document. This first document will be subsequently compared to a second document read by the image forming device 100 after the first document. The image forming device 100 sets the document filter conditions to detect pages in the first and second documents that are the same. With this example, if the number of pages in the document to be converted into a file is great, the pages already included in the previously read document can be easily identified and converted into a file. Accordingly, the image forming device 100 according to the second embodiment can flexibly convert scanned image data into a file.

In addition, the image forming device 100 according to the second embodiment may be configured to set the document filter conditions to detect the pages that are not in the previously read document. By including such a configuration, the image data file 1036 that does not include a page that overlaps with the previously read document is easily generated. Accordingly, the image forming device 100 according to the second embodiment can flexibly convert the scanned image data into a file.

### (Third embodiment)

An image forming device according to a third embodiment includes a tag reader that reads information ("tag information") that is recorded in a wireless tag, such as a Radio Frequency Identifier (RFID) tag. The image forming device reads multipage documents in which an image has been formed on sheets ("tagged sheets") to which a wireless tag has been attached. In addition, the image forming device reads tag information from the tagged sheet of the document by the tag reader. The image forming device sets the document filter condition, for example, in which a tag information includes a specific keyword is the condition.

In general, the third embodiment is similar to the to the first embodiment illustrated in FIGS. 1 to 5 unless otherwise noted.

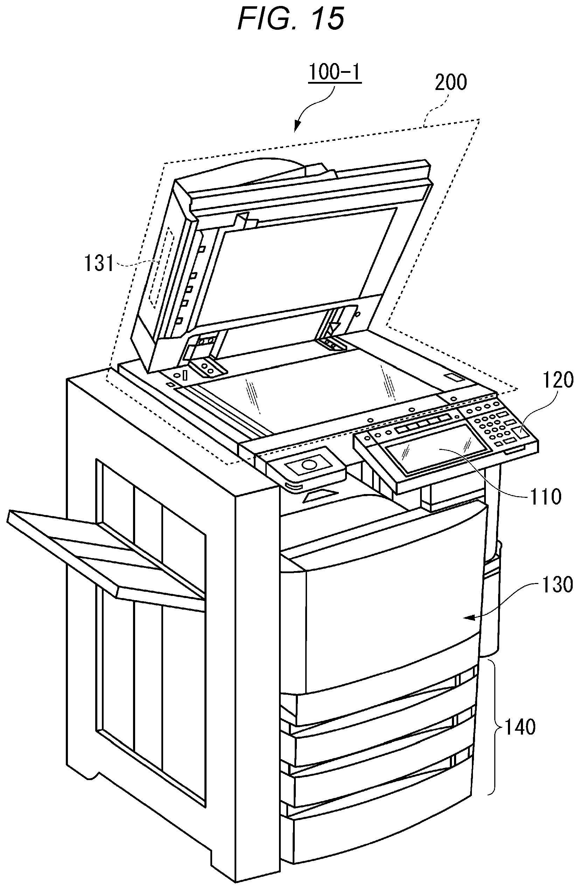

FIG. 15 is an external view of an image forming device 100-1 according to the third embodiment. For the image forming device 100-1, a difference from the image forming device 100 according to the first embodiment illustrated in FIG. 1 is that image reading unit 200 includes a tag reader 131.

The tag reader 131 detects electromagnetic waves sent from a wireless tag on a tagged sheet during the conveyance of tagged sheets from the document stand 20 or placement of a tagged sheet on the document stand 20. The tag reader 131 reads tag information from the wireless tag. The tag reader 131 reads the tag information for each page and records the read tag information in the auxiliary storage device 103.

A case where the document filter condition is that the tag information includes a specific keyword is described as an example.

The control unit 101 causes the display 110 to display the keyword setting screen Pd illustrated in FIG. 9. The user inputs a keyword as the document filter condition on the keyword setting screen Pd. If a keyword has been input by the user, and the selection button "OK" on the keyword setting screen Pd is selected, the control unit 101 identifies a tagged sheet including the tag information with the keyword among all of the tagged sheets of the read document.

The control unit 101 generates the preview screen with only the check box under the preview image corresponding to the page with the identified tagged sheet being checked. The control unit 101 causes the display 110 to display the generated preview screen.

The user can check or uncheck the check box by selecting the check box image on the displayed preview screen. Accordingly, the user can remove any page from the pages identified as including the keyword in its tag information by unchecking the check box or convert the page into a file. The user can also add any page that was determined not to include the keyword by checking the check box. In this manner, the user can manually add or remove a page as required and thus flexibly convert the scanned image data into a file.

In addition, according to the third embodiment, the document filter condition is the tag information including a specific keyword, but the third embodiment is not limited thereto. For example, the document filter condition may be inclusion of a specific image in the tag information.

The various functions of the image forming devices according to each embodiment described above may be realized by a computer. In this case, the function may be realized with a program recorded on a non-transitory computer-readable recording medium being executed by a computer system. In addition, the term "computer system" as used herein may include an operating system (OS) and/or various peripheral devices. The computer-readable recording medium may be a flexible disk, a magneto-optical disk, a ROM, a CD-ROM, or a storage device, such as a hard disk in a computer system. Further, the non-transitory computer-readable recording medium may be accessed via a network such as the Internet or a communication line such as a telephone line or a cloud-based system. Furthermore, some functions may be realized by execution of software, dedicated hardware circuits or the like, and combinations thereof.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims are intended to cover such forms or modifications as would fall within the scope of the inventions.

## Claims

1. An image reading device (100), comprising:
a scanner (200) configured to read documents having a plurality of pages and generate image data for each page;
a display unit (110) to display preview images for pages of a document based on image data from the scanner;
an input unit (120) configured to receive input operations from a user; and
a controller (101, 1011, 1012) configured to set one or more filter conditions according to the information acquired from the input unit;
wherein the controller (101, 1012, 1013) is further configured to cause the display unit to display preview images for pages of the document, wherein
the preview images are initially displayed by the display unit (110) as selected preview images or non-selected preview images according to whether the page corresponding to the respective preview image satisfies the one or more filter conditions or not, the selected preview images satisfying the one or more filter conditions,
each preview image displayed by the display unit is selectable and deselectable by an input operation received by the input unit (120), and
the controller (101, 1014) is further configured to generate a file including only image data for the pages corresponding to the selected preview images wherein the controller (101, 1014) is further configured to store the file in a storage unit.

2. The image reading device (100) according to claim 1, wherein the input unit (120) is a touch panel integrated with the display unit (110).

3. The image reading device (100) according to any one of claims 1 to 2, wherein each preview image is associated with a check box indicating whether the preview image is selected.

4. The image reading device (100) according to any one of claims 1 to 3, wherein a filter condition is whether the page is a color page or a monochrome page.

5. The image reading device (100) according to any one of claims 1 to 3, wherein a filter condition is whether the page includes a user-specified keyword or not.

6. The image reading device (100) according to any one of claims 1 to 3, wherein a filter condition is whether the page includes a user-specified image or not.

7. The image reading device (100) according to any one of claims 1 to 6, wherein the controller is configured to cause a filter condition setting screen to be displayed on the display unit (110), and
a the filter condition is settable by the user manipulating the filter condition setting screen.

8. A document scanning method, comprising:
scanning a document having a plurality of pages and generating image data for each page;
generating one or more filter conditions according to information acquired from an input unit (120);
generating a preview image for each page based on the image data for each page and displaying the preview image on a display screen;
applying the one or more filter conditions to the preview images and displaying the preview images that satisfy the one or more filter conditions as selected on the display screen and displaying the preview images that do not satisfy the one or more filter conditions as non-selected on the display screen;
receiving an input operation from a user via the input unit (120) to change at least one preview image from selected to non-selected or from non-selected to selected;
after receiving the input operation, generate a file including only the image data corresponding to the pages of the selected preview images and recording the generated file in a storage unit.

9. The document scanning method according to claim 8, the input unit (120) is a touch panel integrated with the display screen.

10. The document scanning method according to any one of claims 8 to 9, wherein each preview image is associated with a check box of the display screen indicating whether the preview image is selected or non-selected.

11. The document scanning method according to any one of claims 8 to 10, wherein a filter condition is whether the page is a color page or a monochrome page.

12. The document scanning method according to any one of claims 8 to 10, wherein a filter condition is whether the page includes a user-specified keyword or not.

13. The document scanning method according to any one of claims 8 to 10, wherein a filter condition is whether the page includes a user-specified image or not.

## Patentansprüche

1. Bildlesevorrichtung (100), umfassend:
einen Scanner (200), der konfiguriert, um Dokumente mit einer Vielzahl von Seiten zu lesen und Bilddaten für jede Seite zu erzeugen;
eine Anzeigeeinheit (110), um Vorschaubilder für Seiten eines Dokuments basierend auf Bilddaten vom Scanner anzuzeigen;
eine Eingabeeinheit (120), die konfiguriert ist, um Eingabevorgänge von einem Benutzer zu empfangen; und eine Steuervorrichtung (101, 1011, 1012), die konfiguriert ist, um eine oder mehrere Filterbedingungen gemäß den Informationen einzustellen, die von der Eingabeeinheit erfasst wurden,
wobei die Steuervorrichtung (101, 1012, 1013) weiter konfiguriert ist, um die Anzeigeeinheit zu veranlassen, Vorschaubilder für Seiten des Dokuments anzuzeigen, wobei
die Vorschaubilder anfänglich von der Anzeigeeinheit (110) als ausgewählte Vorschaubilder oder nicht ausgewählte Vorschaubilder angezeigt werden, je nachdem, ob die Seite, die dem jeweiligen Vorschaubild entspricht, eine oder mehrere Filterbedingungen erfüllt oder nicht, wobei die ausgewählten Vorschaubilder die eine oder mehrere Filterbedingungen erfüllen,
wobei jedes Vorschaubild, das von der Anzeigeeinheit angezeigt wird, durch einen Eingabevorgang, der von der Eingabeeinheit (120) empfangen wird, ausgewählt und verworfen werden kann,
wobei die Steuervorrichtung (101, 1014) weiter konfiguriert ist, um eine Datei zu erzeugen, die nur Bilddaten für die Seiten beinhaltet, die den ausgewählten Vorschaubildern entsprechen, wobei die Steuervorrichtung (101, 1014) weiter konfiguriert ist, um die Datei in einer Speichereinheit zu speichern.

2. Bildlesevorrichtung (100) nach Anspruch 1, wobei die Eingabeeinheit (120) ein Touchpanel ist, das in die Anzeigeeinheit (110) integriert ist.

3. Bildlesevorrichtung (100) nach einem der Ansprüche 1 bis 2, wobei jedem Vorschaubild ein Kontrollkästchen zugewiesen ist, das angibt, ob das Vorschaubild ausgewählt ist.

4. Bildlesevorrichtung (100) nach einem der Ansprüche 1 bis 3, wobei eine Filterbedingung darin besteht, ob die Seite eine Farbseite oder eine einfarbige Seite ist.

5. Bildlesevorrichtung (100) nach einem der Ansprüche 1 bis 3, wobei eine Filterbedingung darin besteht, ob die Seite ein benutzerdefiniertes Passwort beinhaltet oder nicht.

6. Bildlesevorrichtung (100) nach einem der Ansprüche 1 bis 3, wobei eine Filterbedingung darin besteht, ob die Seite ein benutzerdefiniertes Bild beinhaltet oder nicht.

7. Bildlesevorrichtung (100) nach einem der Ansprüche 1 bis 6, wobei die Steuervorrichtung konfiguriert ist, um zu veranlassen, dass ein Filterbedingungs-Einstellbildschirm auf der Anzeigeeinheit (110) angezeigt wird und eine Filterbedingung vom Benutzer, der den Filterbedingungs-Einstellbildschirm bedient, eingestellt werden kann.

8. Dokumentenscanverfahren, umfassend:
Scannen eines Dokuments mit einer Vielzahl von Seiten und Erzeugen von Bilddaten für jede Seite;
Erzeugen einer oder mehrerer Filterbedingungen gemäß Informationen, die von einer Eingabeeinheit (120) erfasst wurden;
Erzeugen eines Vorschaubildes für jede Seite basierend auf den Bilddaten für jede Seite und Anzeigen des Vorschaubildes auf einem Anzeigebildschirm;
Anwenden der einen oder mehreren Filterbedingungen auf die Vorschaubilder und Anzeigen der Vorschaubilder, die die eine oder mehreren Filterbedingungen erfüllen, als ausgewählt auf dem Anzeigebildschirm und Anzeigen der Vorschaubilder, die die eine oder mehreren Filterbedingungen nicht erfüllen, als nicht ausgewählt auf dem Anzeigebildschirm;
Empfangen eines Eingabevorgangs von einem Benutzer über die Eingabeeinheit (120), um mindestens ein Vorschaubild von ausgewählt auf nicht ausgewählt oder von nicht ausgewählt auf ausgewählt zu ändern;
nach Empfangen des Eingabevorgangs Erzeugen einer Datei, darin eingeschlossen nur die Bilddaten, die den Seiten der ausgewählten Vorschaubilder entsprechen, und Aufzeichnen der erzeugten Datei in einer Speichereinheit.

9. Dokumentenscanverfahren nach Anspruch 8, wobei die Eingabeeinheit (120) ein Touchpanel ist, das in den Anzeigebildschirm integriert ist.

10. Dokumentenscanverfahren nach einem der Ansprüche 8 bis 9, wobei jedem Vorschaubild ein Kontrollkästchen des Anzeigebildschirms zugewiesen ist, das angibt, ob das Vorschaubild ausgewählt oder nicht ausgewählt ist.

11. Dokumentenscanverfahren nach einem der Ansprüche 8 bis 10, wobei die Filterbedingung darin besteht, ob die Seite eine Farbseite oder eine einfarbige Seite ist.

12. Dokumentenscanverfahren nach einem der Ansprüche 8 bis 10, wobei eine Filterbedingung darin besteht, ob die Seite ein benutzerdefiniertes Passwort beinhaltet oder nicht.

13. Dokumentenscanverfahren nach einem der Ansprüche 8 bis 10, wobei eine Filterbedingung darin besteht, ob die Seite ein benutzerdefiniertes Bild beinhaltet oder nicht.

## Revendications

1. Dispositif de lecture d'images (100), comprenant :
un scanneur (200) configuré pour lire des documents présentant une pluralité de pages et pour générer des données d'image pour chaque page ;
une unité d'affichage (110) pour afficher des images de prévisualisation pour les pages d'un document sur la base des données d'image provenant du scanneur ;
une unité d'entrée (120) configurée pour recevoir des opérations d'entrée provenant d'un utilisateur ; et
un contrôleur (101, 1011, 1012) configuré pour définir une ou plusieurs conditions de filtrage en fonction des informations acquises à partir de l'unité d'entrée ;
dans lequel le contrôleur (101, 1012, 1013) est en outre configuré pour amener l'unité d'affichage à afficher des images de prévisualisation pour les pages du document, dans lequel
les images de prévisualisation sont initialement affichées par l'unité d'affichage (110) en tant que des images de prévisualisation sélectionnées ou en tant que des images de prévisualisation non sélectionnées selon que la page correspondant à l'image de prévisualisation respective satisfait ou non la ou les conditions de filtrage, les images de prévisualisation sélectionnées satisfaisant la ou les conditions de filtrage,
chaque image de prévisualisation affichée par l'unité d'affichage peut être sélectionnée et désélectionnée par une opération d'entrée reçue par l'unité d'entrée (120), et
le contrôleur (101, 1014) est en outre configuré pour générer un fichier comprenant uniquement des données d'image pour les pages correspondant aux images de prévisualisation sélectionnées ;
dans lequel le contrôleur (101, 1014) est en outre configuré pour stocker le fichier dans une unité de stockage.

2. Dispositif de lecture d'images (100) selon la revendication 1, dans lequel l'unité d'entrée (120) est un panneau tactile intégré à l'unité d'affichage (110).

3. Dispositif de lecture d'images (100) selon l'une quelconque des revendications 1 à 2, dans lequel chaque image de prévisualisation est associée à une case à cocher indiquant si l'image de prévisualisation est sélectionnée.

4. Dispositif de lecture d'images (100) selon l'une quelconque des revendications 1 à 3, dans lequel une condition de filtrage est le fait que la page est une page en couleur ou une page monochrome.

5. Dispositif de lecture d'images (100) selon l'une quelconque des revendications 1 à 3, dans lequel une condition de filtrage est le fait que la page comprend ou non un mot-clé spécifié par l'utilisateur.

6. Dispositif de lecture d'images (100) selon l'une quelconque des revendications 1 à 3, dans lequel une condition de filtrage est le fait que la page comprend ou non une image spécifiée par l'utilisateur.

7. Dispositif de lecture d'images (100) selon l'une quelconque des revendications 1 à 6, dans lequel
le contrôleur est configuré pour afficher un écran de définition de conditions de filtrage sur l'unité d'affichage (110), et
une condition de filtrage peut être définie par l'utilisateur, en manipulant l'écran de définition de conditions de filtrage.

8. Procédé de numérisation de documents, comprenant le fait de :
numériser un document présentant une pluralité de pages et générer des données d'image pour chaque page ;
générer une ou plusieurs conditions de filtrage en fonction d'informations acquises à partir d'une unité d'entrée (120) ;
générer une image de prévisualisation pour chaque page sur la base des données d'image pour chaque page et afficher l'image de prévisualisation sur un écran d'affichage ;
appliquer la ou les conditions de filtrage aux images de prévisualisation, et afficher les images de prévisualisation qui satisfont la ou les conditions de filtrage comme sélectionnées sur l'écran d'affichage, et afficher les images de prévisualisation qui ne satisfont pas la ou les conditions de filtrage comme non sélectionnées sur l'écran d'affichage ;
recevoir une opération d'entrée en provenance d'un utilisateur par l'intermédiaire de l'unité d'entrée (120) pour changer au moins une image de prévisualisation de « sélectionnée » à « non sélectionnée » ou de « non sélectionnée » à « sélectionnée » ;
une fois l'opération d'entrée reçue, générer un fichier comprenant uniquement les données d'image correspondant aux pages des images de prévisualisation sélectionnées et enregistrer le fichier généré dans une unité de stockage.

9. Procédé de numérisation de documents selon la revendication 8, dans lequel l'unité d'entrée (120) est un panneau tactile intégré à l'écran d'affichage.

10. Procédé de numérisation de documents selon l'une quelconque des revendications 8 à 9, dans lequel chaque image de prévisualisation est associée à une case à cocher de l'écran d'affichage indiquant si l'image de prévisualisation est sélectionnée ou non sélectionnée.

11. Procédé de numérisation de documents selon l'une quelconque des revendications 8 à 10, dans lequel une condition de filtrage est le fait que la page est une page en couleur ou une page monochrome.

12. Procédé de numérisation de documents selon l'une quelconque des revendications 8 à 10, dans lequel une condition de filtrage est le fait que la page comprend ou non un mot-clé spécifié par l'utilisateur.

13. Procédé de numérisation de documents selon l'une quelconque des revendications 8 à 10, dans lequel une condition de filtrage est le fait que la page comprend ou non une image spécifiée par l'utilisateur.
